# FASCICULE DE BREVET EUROPEEN

(11) **EP 3 473 140 B1**
(45) Date de publication et mention de la délivrance du brevet: **16.02.2022**
(21) Numéro de dépôt: 18200577.7
(22) Date de dépôt: 16.10.2018
(51) Int. Cl.: A47G 21/14, A47J 47/16

(54) **SUPPORT DE COUTEAUX AVEC DISPOSITIF DE MAINTIEN**
MESSERHALTERUNG MIT HALTEVORRICHTUNG
KNIFE HOLDER WITH HOLDING DEVICE

(30) Priorité: 19.10.2017 FR 1759858
(43) Date de publication de la demande: 24.04.2019
(73) Titulaire: SEB S.A., 69130 Ecully (FR)
(72) Inventeur: PLICHON, Stéphane, 74350 Allonzier-La-Caille (FR)
(74) Mandataire: SEB Développement

(56) Documents cités:
- EP-A1- 0 438 969
- WO-A1-2011/044631
- AT-B- 381 223
- FR-A1- 2 391 820
- US-A- 4 575 939
- US-A1- 2013 306 500

## Description

La présente invention concerne un support pour articles de coutellerie, comprenant notamment des couteaux comportant un manche prolongé par une lame ou par une partie utile métallique, par exemple des ciseaux.

On notera que, dans ce document, les termes « longitudinal », « transversal », « horizontal », « vertical », « inférieur », « supérieur », « haut », « bas », « hauteur » employés pour décrire le support, font référence à ce support en situation d'usage, lorsqu'il est posé sur un plan horizontal.

Un support de couteaux est connu par le document AT381223. Il est connu du document US6439403B1 un support de couteaux comportant un dispositif de maintien comprenant
- au moins deux éléments de maintien qui sont agencés en vis-à-vis, chaque élément de maintien comportant une première extrémité d'entrée, et une deuxième extrémité de sortie, les au moins deux éléments de maintien adjacents s'étendant de manière à ce que leur deuxième extrémité de sortie respective tendent à se rejoindre,
- une entrée d'insertion formée entre deux premières extrémités d'entrée des au moins deux éléments de maintien adjacents pour recevoir une lame de couteau,
les au moins deux éléments de maintien adjacents étant fléchis élastiquement lorsque la lame est insérée par l'entrée d'insertion selon une direction d'insertion de manière à ce qu'une force de compression est exercée contre la lame.

Un tel support de couteaux comporte des éléments de maintien qui sont disposés côte à côte et qui sont mobiles selon une direction longitudinale. Chaque élément de maintien est constitué d'une plaque. Deux plaques sont agencées dos à dos et sont reliées par leur première extrémité d'entrée pour constituer un ensemble en forme de V inversé. Lorsqu'une lame de couteau est insérée dans le support par l'entrée d'insertion, les plaques qui sont en contact avec la lame sont fléchies élastiquement et appliquent une force de compression sur la lame afin de la maintenir dans une position insérée.

Cependant, un tel support de couteaux ne permet pas de maintenir deux couteaux présentant chacun une épaisseur de lame différente entre deux plaques adjacentes, par la même entrée d'insertion. En effet, une fois insérée, la lame la plus épaisse écarte élastiquement les plaques pour créer un espace supérieur à l'épaisseur de la lame la plus fine qui, une fois insérée, ne sera pas maintenue.

De plus, les ensembles de deux plaques en forme de V inversé sont mobiles et se déplacent selon la direction longitudinale. Ainsi, au fur et à mesure que les couteaux sont insérés, les entrées d'insertion se rétrécissent. Plus l'utilisateur met de couteaux dans le support, plus il devient difficile d'en mettre d'autres car l'intervalle entre les ensembles de deux plaques en forme de V inversé devient plus serré. Il devient aussi difficile de retirer les lames des couteaux car les forces de compression pour les maintenir augmentent chaque fois que l'utilisateur insère une lame de couteau en plus.

Le but de la présente invention est de remédier aux inconvénients précités et de proposer un support de couteaux présentant une ergonomie améliorée pour permettre à l'utilisateur d'avoir une expérience d'utilisation agréable.

Un autre but de l'invention est de proposer un support de couteaux permettant de garantir un bon maintien quelle que soit l'épaisseur de la lame et quel que soit le nombre de couteaux insérés dans le support.

Un autre but de l'invention est de proposer un support de couteaux présentant une conception simple et économique à mettre en œuvre.

Un autre but de l'invention est de proposer un support de couteaux où les lames des couteaux sont confinées dans un boîtier permettant d'éviter les accidents domestiques.

Ces buts sont atteints avec un support de couteaux comportant une base sur laquelle est agencé un boitier comprenant une ouverture supérieure au-dessus de laquelle est agencé un dispositif de maintien comprenant au moins deux éléments de maintien qui sont agencés en vis-à-vis, chaque élément de maintien comportant une première extrémité d'entrée reliée à un corps, et une deuxième extrémité de sortie, les au moins deux éléments de maintien adjacents s'étendant de manière à ce que leur deuxième extrémité de sortie respective tendent à se rejoindre, une entrée d'insertion étant formée entre deux premières extrémités d'entrée des au moins deux éléments de maintien adjacents pour recevoir une lame de couteau par l'entrée d'insertion suivant une direction d'insertion verticale, les au moins deux éléments de maintien adjacents étant fléchis élastiquement lorsque la lame est insérée par l'entrée d'insertion selon la direction d'insertion verticale de manière à ce qu'une force de compression est exercée contre la lame, chaque élément de maintien comporte une rangée d'au moins deux lamelles pour maintenir deux couteaux présentant chacun une épaisseur de lame différente et les au moins deux lamelles des au moins deux éléments de maintien sont disposées de manière alternée.

Avec une telle construction, chaque entrée d'insertion entre les au moins deux éléments de maintien adjacents peut recevoir et maintenir efficacement au moins deux couteaux présentant chacun une épaisseur de lame différente, seules les lamelles qui sont en contact avec la lame insérée étant fléchies et se déformant afin d'exercer la force de compression contre la lame pour la maintenir en position.

De plus, lorsqu'un couteau biseauté à lame large est inséré par l'entrée d'insertion, la lame du couteau est maintenue sur toute sa largeur. Par couteau biseauté, on comprend un couteau dont le dos de la lame est plus épais que le tranchant de la lame. Ainsi, un tel dispositif de maintien permet d'assurer une bonne stabilité de maintien des couteaux biseautés à lame large.

Les au moins deux lamelles des au moins deux éléments de maintien sont disposées de manière alternée.

Un tel agencement des au moins deux lamelles des au moins deux éléments de maintien garantit une surface de contact importante et suffisante avec la lame insérée. Lorsqu'une lame de petite largeur est insérée par l'entrée d'insertion, les au moins deux lamelles disposées de manière alternée permettent d'assurer un bon contact avec la lame et une bonne stabilité de maintien en position de la lame.

De préférence, les au moins deux lamelles comportent chacune une portion d'extrémité, la portion d'extrémité étant configurée pour croiser un plan médian à l'entrée d'insertion, le plan médian s'étendant selon une direction d'extension de la rangée et selon la direction d'insertion.

Ainsi, lorsqu'une lame est insérée, les portions d'extrémités sont déplacées élastiquement sur une course entre leur position de repos et une position dans laquelle les portions d'extrémités sont tangentes au plan médian. La course des portions d'extrémités augmente la force de compression appliquée sur la lame insérée par les portions d'extrémités et, ainsi assure un bon maintien d'un couteau présentant une lame fine.

De manière avantageuse, chaque lamelle comporte une surface bombée qui est destinée à être en contact avec la lame de couteau insérée entre les au moins deux éléments de maintien.

La surface bombée réduit la surface de contact entre les lamelles et la lame de couteau insérée. Ainsi, la force de frottement entre les lamelles et la lame de couteau est réduite. En conséquence, l'opération d'insertion et de retrait de la lame de couteau devient plus facile pour l'utilisateur.

De plus, cette disposition permet de ne pas couper les lamelles avec la partie coupante de la lame lors de son insertion.

De préférence, chaque lamelle se déforme d'une manière élastique lorsque la lame de couteau est insérée entre les au moins deux éléments de maintien.

L'insertion d'une lame de couteau entre les au moins deux éléments de maintien provoque une déformation élastique de la lamelle. Ainsi, la lamelle peut retrouver sa forme d'origine après avoir été déformée par l'insertion de la lame.

Dans une réalisation préférentielle, le dispositif de maintien comporte un couvercle comportant une paroi munie d'au moins une ouverture de réception de couteau, les au moins deux éléments de maintien étant agencés sous ledit couvercle pour que l'entrée d'insertion soit disposée en vis-à-vis de l'au moins une ouverture de réception.

Ainsi, une extrémité inférieure du manche du couteau appelée la garde peut reposer sur le couvercle lorsque le couteau est inséré dans le support via l'au moins une ouverture de réception de couteau. Le couvercle permet d'assurer une zone d'appui de la garde du couteau pour une bonne mise en position du couteau.

De préférence, le couvercle s'étend selon une direction longitudinale, l'au moins une ouverture de réception étant agencée transversalement à la direction longitudinale.

Une telle construction de support de couteaux permet d'avoir plusieurs ouvertures de réception disposée en parallèle pour permettre le rangement d'une quantité maximum de couteaux dans un volume donné.

Avantageusement, le corps de chaque élément de maintien est fixé sur le couvercle par des moyens de fixation.

Ainsi, les corps des au moins deux éléments de maintien sont immobiles les uns par rapport aux autres et les entrées d'insertion entre les au moins deux éléments de maintien sont constantes, quel que soit le nombre de couteaux insérés. Ainsi, les forces de compression sur les lames ne sont pas influencées par le nombre de couteaux insérés.

De préférence, l'au moins une ouverture de réception comporte deux extrémités selon la direction transversale, le couvercle comportant une butée à chaque extrémité, la butée s'étendant sous la paroi dans la direction d'insertion du couteau.

La butée qui est agencée à chaque extrémité permet d'éviter que certain type de lame de couteau se glisse en dessous de la paroi du couvercle et de rendre l'utilisation plus sécurisée et plus agréable.

De préférence, le support de couteaux comporte un boîtier qui comprend une ouverture supérieure, le couvercle étant agencé sur l'ouverture supérieure de manière amovible.

Ainsi, le couvercle peut être démonté du boîtier pour faciliter le nettoyage.

De préférence, le boîtier est réalisé à partir d'une matière transparente, par exemple le verre, le copolymère styrène-acrylonitrile (SAN).

Le boîtier comporte des surfaces latérales qui sont réalisées à partir d'une matière transparente permettant à l'utilisateur de reconnaître le type de couteau inséré dans le support.

On comprendra mieux les buts, aspects et avantages de la présente invention, d'après la description donnée ci-après des modes particuliers de réalisation de l'invention présentés à titre d'exemples non limitatifs, en se référant aux dessins annexés dans lesquels :
- la figure 1 est une vue en perspective d'un support de couteaux selon un mode particulier de réalisation de l'invention,
- la figure 2 est une vue de dessus du support de couteaux de la figure 1,
- la figure 3 est une vue en coupe du support illustrant le dispositif de maintien, suivant la ligne de coupe III-III de la figure 2,
- la figure 4 est une vue en perspective d'un élément de maintien de la figure 1,
- la figure 5 est une vue en perspective des deux éléments de maintien adjacents de la figure 1,
- la figure 6 est une vue de détail VI de la figure 3,
- la figure 7 est une vue en perspective du dispositif de maintien de la figure 1,
- la figure 8 est une vue en coupe du support illustrant le dispositif de maintien, suivant la ligne de coupe VIII-VIII de la figure 2,

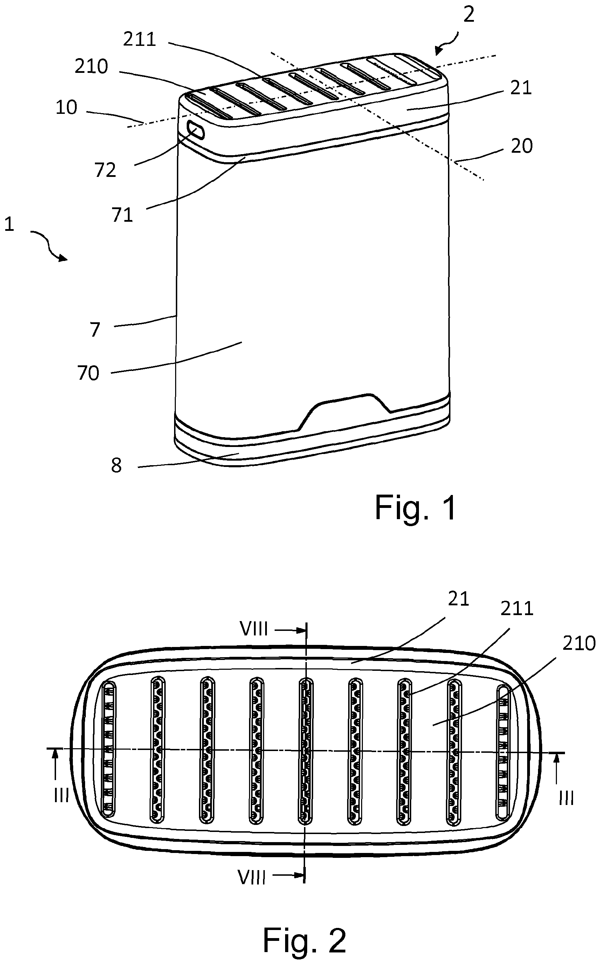

Le mode de réalisation de la présente invention décrit ci-dessous concerne un support 1 comportant un dispositif de maintien destiné à recevoir et maintenir des articles de coutellerie, notamment des couteaux. Comme le montrent la figure 1 et la figure 2, le support 1, en forme de parallélépipède rectangle, possède une base 8 sur laquelle est agencé un boîtier 7, la base 8 s'étendant selon une direction longitudinale 10. Le boîtier 7 comporte une paroi latérale 70 qui est réalisée d'une matière transparente telle que le verre ou le copolymère styrène-acrylonitrile (SAN) pour permettre que l'utilisateur puisse reconnaître le type de couteau inséré dans le boîtier 7 à travers la paroi latérale 70. Le boîtier 7 comporte une ouverture supérieure 71, au-dessus de laquelle est agencé un dispositif de maintien 2. Le dispositif de maintien 2 comprend un couvercle 21 qui est agencé sur le boîtier 7 au niveau de l'ouverture supérieure 71 de manière amovible via un système de clippage 72. Ainsi, le dispositif de maintien 2 peut être désolidarisé du boîtier 7 pour faciliter le nettoyage.

Le couvercle 21 s'étend selon la direction longitudinale 10 et comporte une paroi 210 munie de plusieurs ouvertures de réception 211 de couteaux. Les ouvertures de réception 211 ont chacune une forme rectangulaire et sont agencées transversalement à la direction longitudinale. Les ouvertures de réception 211 sont disposées en parallèle et sont espacées l'une de l'autre d'une distance égale dans la direction longitudinale 10. Un tel agencement du support 1 de couteaux permet le rangement d'une quantité maximum de couteaux dans un volume donné.

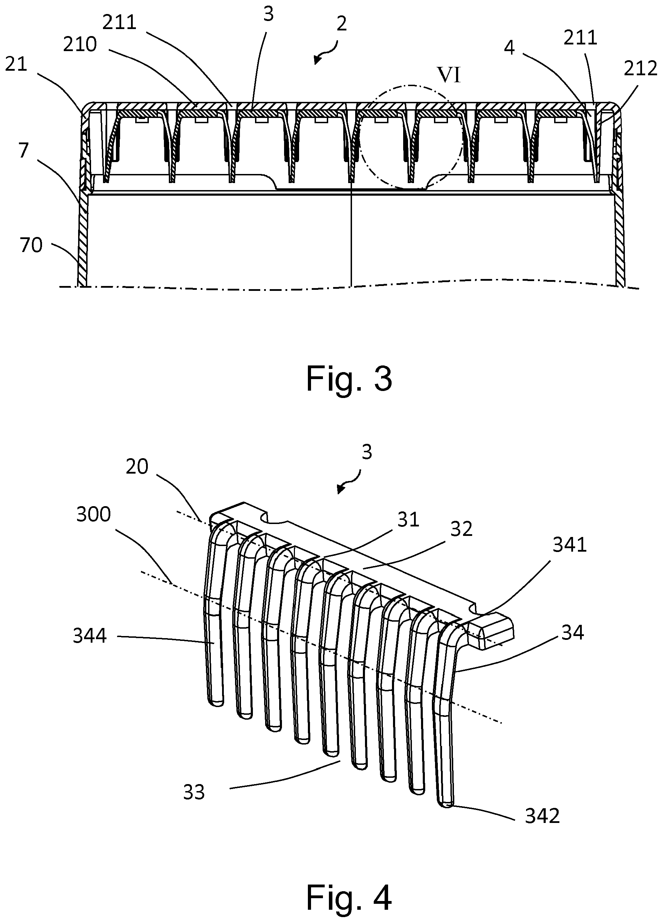

Conformément à la figure 3, le dispositif de maintien 2 comporte des éléments de maintien 3 qui sont disposés côte à côte sous la paroi 210 du couvercle 21, chaque élément de maintien 2 s'étendant selon la direction transversale 20. Tel qu'illustré à la figure 4, chaque élément de maintien 3 comporte une première extrémité d'entrée 31 reliée à un corps 32 et une deuxième extrémité de sortie 33. L'élément de maintien 3 comporte une rangée de lamelles 34, les lamelles 34 de l'élément de maintien 3 s'étendant selon la direction transversale 20. Les lamelles 34 comportent chacune une extrémité haute 341 pour constituer la première extrémité d'entrée 31 et une extrémité basse 342 pour constituer la deuxième extrémité de sortie 33. Les lamelles 34 sont orientées selon la direction d'insertion 50 verticale. Les lamelles sont de longueurs courtes, identiques ou différentes, et ne sont pas en contact avec la base 8. Avantageusement, les lamelles 34 présentent une longueur inférieure à la hauteur du couvercle 21.

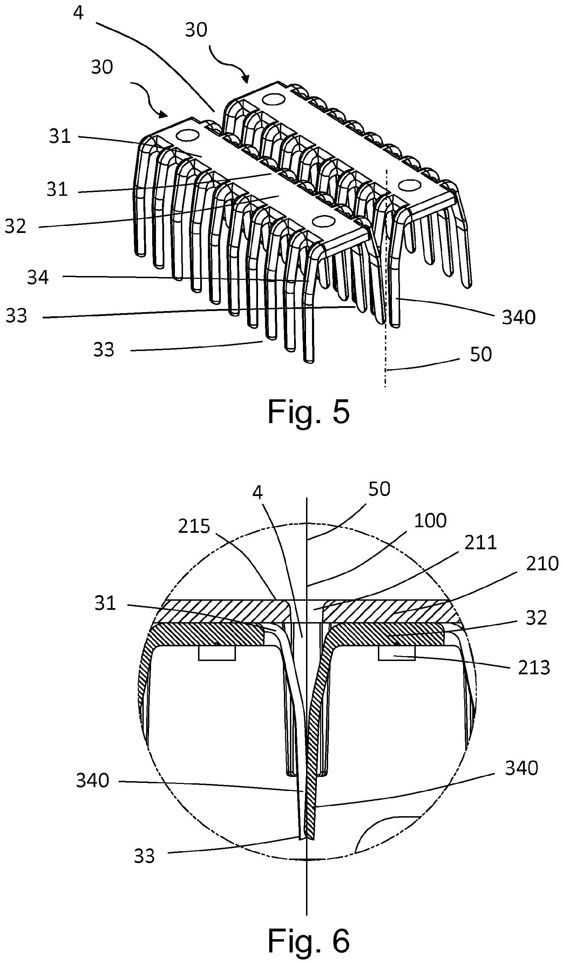

Tel qu'illustré aux figures 3 et 5, chaque deux éléments de maintien 3 qui sont agencés dos-à-dos constitue un ensemble de maintien 30 en forme de U inversé comportant deux premières extrémités d'entrée 31 reliées au corps 32 et deux deuxièmes extrémités de sortie 33. Par dos-à-dos, on comprend un agencement des deux éléments de maintien 3 dont leur deuxième extrémité de sortie 33 respective tendent à s'éloigner. Une entrée d'insertion 4 est formée entre deux premières extrémités d'entrée 31 des deux éléments de maintien 3 qui sont agencés en vis-à-vis. Par vis-à-vis, on comprend un agencement des deux éléments de maintien 3 dont leur deuxième extrémité de sortie 33 respective tendent à se rejoindre. Lorsqu'une lame de couteau est insérée par l'entrée d'insertion 4 selon une direction d'insertion 50 de couteau, les lamelles 34 qui sont en contact avec la lame insérée sont fléchies et se déforment afin d'exercer une force de compression contre la lame pour la maintenir en position. Les lamelles 34 des éléments de maintien 3 sont orientées dans la direction d'insertion verticale 50.

Conformément à la figure 6, chaque lamelle 34 comprend une portion d'extrémité 340 qui est configurée pour croiser un plan médian 100 à l'entrée d'insertion 4, le plan médian 100 s'étendant selon une direction d'extension 300 de la rangée de lamelles 34 et selon la direction d'insertion 50. Lorsqu'une lame est insérée par l'entrée d'insertion 4 selon la direction d'insertion 50, les portions d'extrémités 340 des lamelles 34 qui sont en contact avec la lame insérée sont déplacées élastiquement sur une course entre leur position de repos et une position dans laquelle les portions d'extrémités 340 sont tangentes au plan médian 100. La course des portions d'extrémités augmente la force de compression appliquée sur la lame insérée, et ainsi assure un bon maintien d'un couteau présentant une lame fine.

La lamelle 34 est réalisée dans une matière thermoplastique à base de polyoxyméthylène (POM). L'insertion d'une lame de couteau entre chaque deux éléments de maintien 3 provoque une déformation élastique de la lamelle 34. Ainsi, la lamelle 34 peut retrouver sa forme d'origine après avoir été déformée suite à l'insertion de la lame.

Les éléments de maintien 3 sont solidaires du couvercle 21 et les corps 32 des éléments de maintien 3 sont soudés sur la paroi 210 par ultrason. Le couvercle 21 comporte des plots 213 qui coopèrent avec des ouvertures du corps 32. Les plots 213 sont déformés par ultrason. Les corps 32 des éléments de maintien 3 sont immobiles les uns des autres. De ce fait, les entrées d'insertion 4 entre les éléments de maintien 3 restent constantes, quel que soit le nombre de couteaux insérés dans le support 1. Ainsi, les forces de compression pour maintenir les lames restent aussi constantes et ne sont pas influencées par le nombre de couteaux insérés.

En se référant aux figures 3 et 6, les éléments de maintien 3 sont agencés de manière à ce que chaque entrée d'insertion 4 soit disposée en vis-à-vis d'une ouverture de réception 211 du couvercle 21. Ainsi, une extrémité inférieure du manche du couteau appelée la garde peut reposer sur le couvercle 21 lorsque le couteau est inséré dans le support 1 via l'ouverture de réception 211. Le couvercle 21 assure une zone d'appui 215 de la garde du couteau pour une bonne mise en position du couteau. La taille de la largeur de l'ouverture de réception 211 est légèrement inférieure à celle de l'entrée d'insertion 4 afin que la partie coupante de la lame de couteau n'abime pas l'élément de maintien 3 lors de son insertion.

Comme le montrent les figures 2 et 5, les lamelles 34 des deux éléments de maintien 3 adjacents sont disposées de manière alternée. Lorsqu'une lame de petite largeur est insérée par l'entrée d'insertion 4, la lame est maintenue par au moins trois lamelles 34 permettant d'assurer un bon maintien de la lame.

Tel qu'illustré à la figure 4, chaque lamelle 34 comporte une surface bombée 344 qui est destinée à être en contact avec la lame de couteau insérée entre deux éléments de maintien 3 qui sont en vis-à-vis. Les surfaces bombées 344 des lamelles 34 sont orientées vers la lame de couteau. La surface bombée 344 réduit la surface de contact entre les lamelles et la lame de couteau insérée. Ainsi, la force de frottement entre les lamelles et la lame est réduite afin de faciliter l'opération d'insertion et de retrait de la lame de couteau.

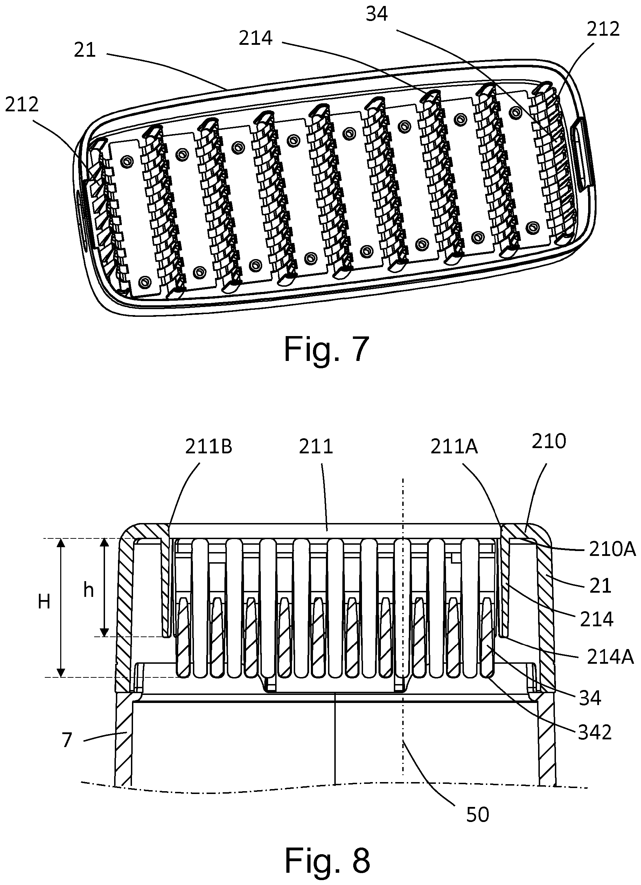

Conformément aux figures 3 et 7, le couvercle 21 comporte des plaquettes 212 rigides sous la paroi 210 à chaque extrémité longitudinale du couvercle 21. Les plaquettes 212 sont disposées de manière alternée avec les lamelles 34 de l'élément de maintien 3 situé à chaque extrémité longitudinale. Une ouverture de réception 211 du couvercle 21 est disposée en vis-à-vis d'une entrée d'insertion 4 formée entre les plaquettes 212 et la première extrémité d'entrée de l'élément de maintien 3 situé à chaque extrémité longitudinale.

En se référant aux figures 7 et 8, chaque ouverture de réception 211 comporte deux extrémités 211A, 211B suivant la direction transversale 20. Le couvercle 21 comporte une butée 214 à chaque extrémité 211A, 211B. La butée 214 s'étend sous la paroi 210 dans la direction d'insertion 50 de couteau. La longueur H comme indiquée dans la figure 8 est la distance entre une surface intérieure 210A de la paroi 210 et l'extrémité basse 342 de la lamelle 34 suivant une direction verticale, la direction verticale étant confondue avec la direction d'insertion 50. La longueur h est la distance entre la surface intérieure 210A de la paroi 210 et une extrémité libre 214A de la butée 214. La longueur h est comprise entre 0.5H et 1H. De préférence, la longueur H est inférieure à la hauteur du couvercle.

Quand un couteau muni d'un talon est inséré trop près de l'extrémité 211A, 211B de l'ouverture de réception 211, le talon de la lame du couteau risque de se glisser en dessous de la paroi 210 du couvercle 21 et de rendre le retrait de couteau très difficile, voire impossible. Par talon de la lame, on comprend une partie inférieure de la lame qui est près du manche de couteau. Ainsi, la butée 214 qui est agencée à chaque extrémité 211A, 211B permet d'éviter que certain type de lame de couteau se glisse en dessous de la paroi 210 du couvercle 21.

En fonctionnement, l'utilisateur saisit le manche d'un couteau et insère l'extrémité de la lame du couteau dans le support 1 par l'ouverture de réception 211 du couvercle 21 suivant la direction d'insertion 50 verticale. Seules les lamelles 34 qui viennent en contact avec la lame insérée sont d'abord déplacées élastiquement sur la course entre leur position de repos et la position dans laquelle les portions d'extrémités 340 des lamelles sont tangentes au plan médian 100. Ensuite, les lamelles 34, en contact avec la lame, continuent à se déplacer élastiquement sur une course supplémentaire correspondant à une demie épaisseur de la lame de couteau. Le déplacement élastique des lamelles 34 crée une force de compression qui permet de maintenir le couteau en position insérée. Seules les lamelles 34 qui sont en contact avec la lame insérée sont fléchies et se déforment pour le maintien du couteau. L'utilisateur peut insérer des couteaux présentant chacun une épaisseur de lame différente par la même entrée d'insertion 4. L'insertion d'un couteau dans le support 1 n'influencera pas le maintien d'un autre couteau déjà inséré. L'utilisateur peut mettre autant de couteaux que possible dans les ouvertures de réception 211 du couvercle 21 jusqu'à ce qu'il n'y ait plus d'espace libre. Pour le retrait, l'utilisateur saisit simplement à nouveau le manche du couteau inséré et le retire dans un sens opposé à la direction d'insertion 50.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, chaque élément de maintien s'étend selon la direction longitudinale et le couvercle comporte une ouverture de réception orientée longitudinalement.

Dans une autre variante de réalisation, le dispositif de maintien ne comporte pas de couvercle. Les éléments de maintien sont fixés sur la base via des tiges verticales.

## Revendications

1. Support (1) de couteaux comportant une base (8) sur laquelle est agencé un boitier (7) comprenant une ouverture supérieure (71) au-dessus de laquelle est agencé un dispositif de maintien (2) comprenant au moins deux éléments de maintien (3) qui sont agencés en vis-à-vis, chaque élément de maintien (3) comportant une première extrémité d'entrée (31) reliée à un corps (32), et une deuxième extrémité de sortie (33), les au moins deux éléments de maintien (3) adjacents s'étendant de manière à ce que leur deuxième extrémité de sortie (33) respective tendent à se rejoindre, une entrée d'insertion (4) étant formée entre deux premières extrémités d'entrée (31) des au moins deux éléments de maintien (3) adjacents pour recevoir une lame de couteau par l'entrée d'insertion (4) suivant une direction d'insertion (50) verticale, les au moins deux éléments de maintien (3) adjacents étant fléchis élastiquement lorsque la lame est insérée par l'entrée d'insertion (4) selon la direction d'insertion (50) verticale de manière à ce qu'une force de compression est exercée contre la lame, **caractérisé en ce que** chaque élément de maintien (3) comporte une rangée d'au moins deux lamelles (34) pour maintenir deux couteaux présentant chacun une épaisseur de lame différente, et **en ce que** les au moins deux lamelles (34) des au moins deux éléments de maintien (3) sont disposées de manière alternée.

2. Support (1) de couteaux selon la revendication 1, **caractérisé en ce que** les au moins deux lamelles (34) comportent chacune une portion d'extrémité (341), la portion d'extrémité (341) étant configurée pour croiser un plan médian (100) à l'entrée d'insertion, le plan médian (100) s'étendant selon une direction d'extension de la rangée et selon la direction d'insertion.

3. Support (1) de couteaux selon l'une quelconque des revendications précédentes, **caractérisé en ce que** chaque lamelle (34) comporte une surface bombée (342) qui est destinée à être en contact avec la lame de couteau insérée entre les au moins deux éléments de maintien (3).

4. Support (1) de couteaux selon l'une quelconque des revendications précédentes, **caractérisé en ce que** chaque lamelle (34) se déforme d'une manière élastique lorsque la lame de couteau est insérée entre les au moins deux éléments de maintien (3).

5. Support (1) de couteaux selon l'une quelconque des revendications précédentes, **caractérisé en ce que** le dispositif de maintien (2) comporte un couvercle (21) comportant une paroi (210) munie d'au moins une ouverture de réception (211) de couteau, les au moins deux éléments de maintien (3) étant agencés sous ledit couvercle (21) pour que l'entrée d'insertion (4) soit disposée en vis-à-vis de l'au moins une ouverture de réception (211).

6. Support (1) de couteaux selon la revendication 5, **caractérisé en ce que** le couvercle (21) s'étend selon une direction longitudinale, l'au moins une ouverture de réception (211) étant agencée transversalement à la direction longitudinale.

7. Support (1) de couteaux selon l'une quelconque des revendications 5 à 6, **caractérisé en ce que** le corps (32) de chaque élément de maintien (3) est fixé sur le couvercle (21) par des moyens de fixation (5).

8. Support (1) de couteaux selon l'une quelconque des revendications 5 à 7, **caractérisé en ce que** l'au moins une ouverture de réception (211) comporte deux extrémités selon la direction transversale, le couvercle (21) comportant une butée (214) à chaque extrémité, la butée (214) s'étendant sous la paroi (210) dans la direction d'insertion du couteau.

9. Support (1) de couteaux selon l'une quelconque des revendications 5 à 8, **caractérisé en ce que** le couvercle (21) est agencé sur l'ouverture supérieure (71) de manière amovible.

10. Support (1) de couteaux selon la revendication 9, **caractérisé en ce que** le boîtier (7) est réalisé à partir d'une matière transparente, par exemple le verre, le copolymère styrène-acrylonitrile (SAN).

## Patentansprüche

1. Messerhalterung (1), die einen Sockel (8) beinhaltet, auf dem ein Gehäuse (7) angeordnet ist, das eine obere Öffnung (71) umfasst, über der eine Haltevorrichtung (2) angeordnet ist, die mindestens zwei Halteelemente (3) umfasst, die einander gegenüber angeordnet sind, wobei jedes Halteelement (3) ein erstes Eintrittsende (31), das mit einem Korpus (32) verbunden ist, und ein zweites Austrittsende (33) beinhaltet, wobei sich die mindestens zwei angrenzenden Halteelemente (3) derart erstrecken, dass ihr jeweiliges zweites Austrittsende (33) dazu tendiert, sich anzunähern, wobei ein Einführungseintritt (4) zwischen zwei ersten Eintrittsenden (31) der mindestens zwei angrenzenden Halteelemente (3) gebildet ist, um eine Messerklinge durch den Einführungseintritt (4) entlang einer vertikalen Einführungsrichtung (50) aufzunehmen, wobei die mindestens zwei angrenzenden Halteelemente (3) elastisch durchgebogen werden, wenn die Klinge durch den Einführungseintritt (4) entlang einer vertikalen Einführungsrichtung (50) eingeführt wird, sodass eine Kompressionskraft an die Klinge angelegt wird, **dadurch gekennzeichnet, dass** jedes Halteelement (3) eine Reihe mit mindestens zwei Lamellen (34) beinhaltet, um zwei Messer zu halten, die jeweils eine unterschiedliche Klingendicke aufweisen, und dadurch, dass die mindestens zwei Lamellen (34) der mindestens zwei Halteelemente (3) abwechselnd angeordnet sind.

2. Messerhalterung (1) nach Anspruch 1, **dadurch gekennzeichnet, dass** die mindestens zwei Lamellen (34) jeweils einen Endabschnitt (341) beinhalten, wobei der Endabschnitt (341) konfiguriert ist, um eine Mittelebene (100) am Einführungseintritt zu kreuzen, wobei sich die Mittelebene (100) in einer Erstreckungsrichtung der Reihe und entlang der Einführungsrichtung erstreckt.

3. Messerhalterung (1) nach einem der vorstehenden Ansprüche, **dadurch gekennzeichnet, dass** jede Lamelle (34) eine ballige Oberfläche (342) beinhaltet, die dazu bestimmt ist, in Kontakt mit der Messerklinge zu stehen, die zwischen den mindestens zwei Halteelementen (3) eingeführt ist.

4. Messerhalterung (1) nach einem der vorstehenden Ansprüche, **dadurch gekennzeichnet, dass** sich jede Lamelle (34) in elastischer Form verformt, wenn die Messerklinge zwischen den mindestens zwei Halteelementen (3) eingeführt ist.

5. Messerhalterung (1) nach einem der vorstehenden Ansprüche, **dadurch gekennzeichnet, dass** die Haltevorrichtung (2) einen Deckel (21) beinhaltet, der eine Wand (210) beinhaltet, die mit mindestens einer Messeraufnahmeöffnung (211) versehen ist, wobei die mindestens zwei Halteelemente (3) unter dem Deckel (21) angeordnet sind, damit der Einführungseintritt (4) gegenüber der mindestens einen Aufnahmeöffnung (211) angeordnet ist.

6. Messerhalterung (1) nach Anspruch 5, **dadurch gekennzeichnet, dass** sich der Deckel (21) in einer Längsrichtung erstreckt, wobei die mindestens eine Aufnahmeöffnung (211) quer zur Längsrichtung angeordnet ist.

7. Messerhalterung (1) nach einem der Ansprüche 5 bis 6, **dadurch gekennzeichnet, dass** der Korpus (32) eines jeden Halteelements (3) anhand von Befestigungsmitteln (5) an dem Deckel (21) befestigt ist.

8. Messerhalterung (1) nach einem der Ansprüche 5 bis 7, **dadurch gekennzeichnet, dass** die mindestens eine Aufnahmeöffnung (211) zwei Enden in der Querrichtung beinhaltet, wobei der Deckel (21) einen Anschlag (214) an jedem Ende beinhaltet, wobei sich der Anschlag (214) unter der Wand (210) in der Einführungsrichtung des Messers erstreckt.

9. Messerhalterung (1) nach einem der Ansprüche 5 bis 8, **dadurch gekennzeichnet, dass** der Deckel (21) an der oberen Öffnung (71) in abnehmbarer Form angeordnet ist.

10. Messerhalterung (1) nach Anspruch 9, **dadurch gekennzeichnet, dass** das Gehäuse (7) aus einem transparenten Werkstoff, beispielsweise aus Glas, Styrol-Acrylnitril-Copolymer (SAN) gefertigt ist.

## Claims

1. Knife holder (1) comprising a base (8) on which is arranged a casing (7) comprising an upper opening (71) above which is arranged a holding device (2) comprising at least two holding element (3) which are arranged opposite one another, each holding element (3) comprising a first inlet end (31) connected to a body (32), and a second outlet end (33), the at least two adjacent holding elements (3) extending such that their second respective outlet end (33) intend to interconnect, an insertion inlet (4) being formed between two first inlet ends (31) of the at least two adjacent holding elements (3) to receive a knife blade through the insertion inlet (4) along a vertical insertion direction (50), the at least two adjacent holding elements (3) being elastically bent when the blade is inserted through the insertion inlet (4) along the vertical insertion direction (50) such that a compression force is exerted against the blade, **characterised in that** each holding element (3) comprises a row of at least two blades (34) to hold two knives each having a different blade thickness, and **in that** the at least two blades (34) of the at least two holding elements (3) are arranged alternately.

2. Knife holder (1) according to claim 1, **characterised in that** the at least two blades (34) each comprise an end portion (341), the end portion (341) being configured to cross a median plane (100) at the insertion inlet, the median plane (100) extending along an extension direction of the row and along the insertion direction.

3. Knife holder (1) according to any one of the preceding claims, **characterised in that** each blade (34) comprises a curved surface (342) which is intended to be in contact with the knife blade inserted between the at least two holding elements (3).

4. Knife holder (1) according to any one of the preceding claims, **characterised in that** each blade (34) is elastically deformed when the knife blade is inserted between the at least two holding elements (3).

5. Knife holder (1) according to any one of the preceding claims, **characterised in that** the holding device (2) comprises a cover (21) comprising a wall (210) equipped with at least one knife receiving opening (211), the at least two holding elements (3) being arranged under said cover (21) such that the insertion inlet (4) is arranged opposite the at least one receiving opening (211).

6. Knife holder (1) according to claim 5, **characterised in that** the cover (21) extends along a longitudinal direction, the at least one receiving opening (211) being arranged transversally to the longitudinal direction.

7. Knife holder (1) according to any one of claims 5 to 6, **characterised in that** the body (32) of each holding element (3) is fixed on the cover (21) by fixing means (5).

8. Knife holder (1) according to any one of claims 5 to 7, **characterised in that** the at least one receiving opening (211) comprises two ends along the transverse direction, the cover (21) comprising an abutment (214) at each end, the abutment (214) extending under the wall (210) in the insertion direction of the knife.

9. Knife holder (1) according to any one of claims 5 to 8, **characterised in that** the cover (21) is arranged to be removed on the upper opening (71).

10. Knife holder (1) according to claim 9, **characterised in that** the casing (7) is made from a transparent material, for example glass, styrene acrylonitrile (SAN) copolymer.
